# EUROPÄISCHE PATENTSCHRIFT

(11) **EP 4 433 239 B1**
(45) Veröffentlichungstag und Bekanntmachung des Hinweises auf die Patenterteilung: **01.07.2026**
(21) Anmeldenummer: 22817611.1
(22) Anmeldetag: 11.11.2022
(51) Int. Cl.: B22D 18/04, B22D 18/06, B22D 25/00, B22F 3/11, C22C 1/08, H01M 4/04, H01M 4/24, H01M 4/26, H01M 4/38, H01M 4/42, H01M 10/24, H01M 10/30, C22C 1/10, H01M 4/02

(54) **VERFAHREN ZUR HERSTELLUNG EINES DREIDIMENSIONALEN METALLFORMKÖRPERS MIT OFFENZELLIGER METALLSCHWAMMSTRUKTUR UND ZUR VERWENDUNG DESSELBEN**
METHOD FOR PRODUCING A THREE-DIMENSIONAL METAL BODY HAVING AN OPEN-CELL METAL FOAM STRUCTURE AND THE USE THEREOF
PROCÉDÉ DE FABRICATION D'UN CORPS MÉTALLIQUE TRIDIMENSIONNEL À STRUCTURE DE MOUSSE MÉTALLIQUE À CELLULES OUVERTES ET UTILISATION DE CELUI-CI

(30) Priorität: 16.11.2021 EP 21208534
(43) Veröffentlichungstag der Anmeldung: 25.09.2024
(73) Patentinhaber: Grillo-Werke AG, 47169 Duisburg (DE)
(72) Erfinder: HESNAOUI, Kathrin, 47169 Duisburg (DE); WISNIEWSKI, Jürgen, 47169 Duisburg (DE); GEHRKE, Petra, 47169 Duisburg (DE); MELZER, Armin, 47169 Duisburg (DE); PRENGER, Frank, 47169 Duisburg (DE); MÜLLER, Silke, 47169 Duisburg (DE)
(74) Vertreter: dompatent
(86) Internationale Anmeldenummer: PCT/EP2022/081588
(87) Internationale Veröffentlichungsnummer: WO 2023/088797

(56) Entgegenhaltungen:
- CN-A- 1 935 414
- CN-A- 108 193 070
- CN-A- 110 052 594
- US-B1- 6 649 305
- JOSEPH F. PARKER ET AL, SCIENCE, vol. 356, no. 6336, 28 April 2017 (2017-04-28), US, pages 415 - 418, XP055719859, ISSN: 0036-8075, DOI: 10.1126/science.aak9991
- KAINUMA SHIGENOBU ET AL: "Fundamental Study on Corrosion Protection Method with Sacrificial Anode of Steel Members using Porous Sintered Plate and Fiber Sheet in Atmospheric Environment", J-STAGE, 30 December 2011 (2011-12-30), pages 535 - 540, XP093008080, Retrieved from the Internet <URL:https://www.jstage.jst.go.jp/article/jcorr/60/12/60_535/_pdf/-char/ja> [retrieved on 20221214], DOI: https://doi.org/10.3323/jcorr.60.535
- ISHIHARA SHUJI ET AL: "Fundamental Study on Corrosion Protection Effect with Sacrificial Anode for Corroded Steel Members using Porous Sintered Plate and Fiber Sheet in an Atmospheric Environment", J-STAGE, 1 July 2014 (2014-07-01), pages 609 - 615, XP093008085, Retrieved from the Internet <URL:https://www.jstage.jst.go.jp/article/jcorr/63/12/63_609/_pdf/-char/ja> [retrieved on 20221214], DOI: 10.3323/jcorr.63.609

## Beschreibung

Die vorliegende Erfindung betrifft ein Verfahren zur Herstellung von Metallformkörpern mit offenzelliger Struktur aus Zink, Zinn, oder geeigneten Legierungen dieser Metalle, sowie deren Verwendung als Anode in Batterien.

Batterien und insbesondere Akkumulatoren spielen eine entscheidende Rolle in der sogenannten Energiewende. Ihre Anwendung ist sowohl stationär sowie für netzstabilisierende Speicher (Energiespeicher) geplant. Energiespeicher werden auch im Haushaltsbereich insbesondere zur Speicherung von Solarenergie eingesetzt. Aber auch in Fahrzeugen oder im Consumer-Bereich kommen sie vermehrt zum Einsatz.

Akkus auf Basis poröser Metallformkörper haben dabei ein großes Potenzial als Alternative zu Nickel-Metallhydrid-, Bleisäure- und sogar Lithiumionen-Akkus. Am weitesten verbreitet und in der Allgemeinheit bekannt sind Lithiumionen Akkumulatoren aus dem Consumer-Bereich sowie Blei-Akkumulatoren aus Fahrzeugen.

Insbesondere Lithium enthaltende Akkumulatoren (Akkus) stehen jedoch zunehmend in der Kritik, da der Abbau von Lithium häufig mit einer hohen Umweltbelastung einhergeht. Zudem sind die Ressourcen begrenzt. Bei Nickel-Metallhydrid Akkumulatoren werden Seltene-Erden wie Cer und Lanthan eingesetzt.

Als alternatives Material für Batterien und Akkumulatoren hat Zink zuletzt an Bedeutung gewonnen. Schwammanoden auf Zinkbasis haben beispielsweise gegenüber Bleianoden einen erheblichen Dichtevorteil. Beim Einsatz von Zink als Batteriematerial ist auch bei einer Massenproduktion keine Verknappung des Rohstoffes zu befürchten. Zudem werden keine seltenen Metalle oder seltenen Erden verwendet und die Recyclingfähigkeit macht den Einsatz zusätzlich nachhaltig. Zinkelektroden bieten außerdem ein hohes Potential, weshalb sie im Bereich der Primärbatterien eingesetzt werden können.

Die Bedenken wie sie z.B. bei Lithiumionenakkumulatoren bezüglich Sicherheit (Risiko durch entzündliche Bestandteile) bestehen, liegen bei Zn-Batterien nicht vor. Zinkbatterien enthalten in aller Regel wasserbasierte und damit nicht entzündliche Elektrolyte.

Normalerweise werden Zinkelektroden für Batterien (wie beispielsweise Ni/Zn; Zn/Luft; Zn/Ag; Zn/Mn; oder Zn/Brom Batterien) aus Pulver hergestellt (Trueb & Rüetschi, 1998, Batterien und Akkumulatoren. Springer-Verlag). Hierbei wird das Zink-Pulver gepresst oder mit Zusatzstoffen versehen und verpresst, z.B. im Kalanderverfahren (Birke & Schiemann, 2013, Akkumulatore Vergangenheit, Gegenwart und Zukunft Energiespeicher. München: Herbert Utz Verlag GmbH). Eine weitere Möglichkeit ist das Sintern (US3663297A).

Grundvoraussetzung für eine technische Realisierbarkeit eines Zink-Akkumulators, also eines Akkumulators mit einer Elektrode, insbesondere Anode, aus Zink, ist die Zyklenfestigkeit bei einer hohen Leistung der Zelle. In der Vergangenheit beruhten die Problemfelder der Zinkelektroden auf strukturellen Änderungen während der Lade-/ Entladevorgänge.

Bekannte Ursachen dafür sind das Dendritenwachstum sowie der sogenannte Shape Change. Unter Dendritenwachstum versteht man das Aufwachsen von länglichen Kristallstrukturen während des Ladevorgangs auf der Zinkelektrode, welches zu internen Kurzschlüssen und somit zum Ausfall der Zelle führen kann. Shape Change ist eine lokale Zinkabscheidung im unteren Elektrodenbereich, bedingt durch inhomogene Stromverteilung und Gravitationseffekte. Diese Geometrieänderung der Elektrode kann letztendlich ebenfalls zum Kurzschluss und damit zum Ausfall der Zelle führen.

Elektrodenstrukturierungen stellen einen aus der Literatur bereits bekannten Ansatz dar, Um den Ausfall der Zelle zu vermeiden (Trueb & Rüetschi, 1998, Batterien und Akkumulatoren. Springer-Verlag, S. 111). Dreidimensionale Anodenstrukturen zeigen einen großen Vorteil bezüglich der Wiederaufladbarkeit durch die Vermeidung struktureller Defizite. Die Ansätze, dreidimensionale Elektrodenstrukturen herzustellen, beruhen auf der Verwendung von Batteriepulver. Dabei werden die porösen Zinkstrukturen nasschemisch hergestellt (Joseph F. Parker, C. N. (28. 04. 2017). Rechargeable nickel-3D zinc batteries: An energy-dense, safer alternative to lithium-ion. Science, S. 415-418).

Verfahrensbedingt ist die Porengröße und Porenstruktur dieser Systeme limitiert. Die Struktur ist durch den Grundwerkstoff Pulver geprägt, häufig müssen zur Erhaltung der Strukturen Bindemittel eingesetzt werden. Die so hergestellten Strukturen haben den Nachteil, dass es sich nicht um ein durchgängig metallisches Gerüst handelt. Dies kann zu einer ungleichmäßigen Ableitung der Ladung führen und so zu einer punktuellen Ablagerung von Zink während des Ladevorgangs (DE 60014465 T2).

CN 110052594 A, CN 108193070 A und CN 1935414 A offenbaren Verfahren wie Unterdruckgießverfahren zur Herstellung von Zink-Aluminium-Schaumlegierungen.

US 6,649,305 B1 offenbart Sekundäre elektrochemische Generatoren vom alkalischen Zinkelektrodentyp, deren Anode eine hohe Zyklenstabilität aufweist.

Die Generatoren gemäß der Offenbarung umfassen Zinkanoden, die so beschaffen sind, dass die Anzahl der Zinkbildungsstellen im Aktivmaterial während des Ladevorgangs durch eine verbesserte Ableitung der elektrischen Ladungen erhöht wird.

Es besteht daher Bedarf an neuartigen Strukturen bzw. Herstellverfahren dieser, mit welchen die Nachteile aus dem Stand der Technik vermieden werden. Insbesondere besteht Bedarf an Herstellungsverfahren, welche eine offene Porosität ermöglichen. Gleichzeitig soll die Porengröße möglichst über einen breiten Bereich unabhängig von der weiteren Dimension des Formkörpers an sich einstellbar sein.

Überraschenderweise hat sich gezeigt, dass mittels eines Druckdifferenzverfahrens dreidimensionale Formkörper mit einer offenzelligen Struktur erhalten werden können. Offenzellige Struktur im Sinne der vorliegenden Anmeldung bedeutet, dass der Formkörper in der Art eines Schwammes vorliegt, also eine offene Metallschwammstruktur aufweist. Dabei bezieht sich offenzellig alleine auf die Struktur des Metalls, unabhängig davon, ob die Metallschwammstruktur mit einem von dem Metall verschiedenen Material gefüllt ist oder nicht. Diese Formkörper können als Anode insbesondere einer Batterie oder eines Akkumulators verwendet werden.

In einer ersten Ausführungsform wird die der vorliegenden Erfindung zu Grunde liegende Aufgabe gelöst durch ein Verfahren zur Herstellung eines dreidimensionalen offenzelligen Metallformkörpers, wie es in dem unabhängigen Anspruch 1 angegeben ist.

Das erfindungsgemäße Verfahren ermöglicht die Herstellung eines Metallformkörpers mit offenzelliger Metallschwammstruktur. Offenzellig bezieht sich dabei auf die Struktur des Metallschwammes an sich, unabhängig davon, ob die enthaltenen Zellen oder Poren mit einem von dem Metall verschiedenen Material gefüllt sind oder nicht.

Erfindungsgemäß kann das Verfahren weiterhin den Schritt umfassen:
g) Entfernung der Platzhalter aus dem dreidimensionalen Metallformkörper.

Die Entfernung der Platzhalter kann vollständig oder auch teilweise erfolgen.

Nach dem Erstarren gemäß Schritt f) des erfindungsgemäßen Verfahrens kann der Metallformkörper aus der Gießform entnommen werden. Es ist erfindungsgemäß jedoch auch möglich, den Metallformkörper in der Gießform zu belassen und dort, soweit gewünscht, den Platzhalter aus dem Metallformkörper noch in der Gießform entfernt. Es ist erfindungsgemäß jedoch auch möglich, den Platzhalter außerhalb der Gießform vollständig oder teilweise aus dem Metallformkörper zu entfernen.

In einer weiteren, lediglich die Offenbarung ergänzenden Ausführungsform wird ein Metallformkörper mit offenzelliger Metallschwammstruktur beschrieben, welcher nach dem erfindungsgemäßen Verfahren erhalten wird.

In einer weiteren Ausführungsform wird die der vorliegenden Erfindung zugrunde liegende Aufgabe gelöst durch die Verwendung eines solchen Metallformkörpers mit offenzelliger Metallschwammstruktur als Anode in Batterien.

Diese Ausführungsformen sowie bevorzugte Ausgestaltungen werden im Folgenden weiter erläutert. Die nachfolgend erläuterten Merkmale können in beliebiger Art und Weise miteinander kombiniert werden. Auch wenn sie nur in Verbindung mit einer Ausführungsform dargestellt sind, sind sie für alle Ausführungsformen gültig, soweit dies nicht explizit anders dargestellt ist.

Das erfindungsgemäße Verfahren ermöglicht die Herstellung von Metallformkörpern mit offenzelliger Metallschwammstruktur durch ein schmelzmetallurgisches Verfahren mit funktionalen Platzhaltern. Als Metall, aus welchem die Metallschwammstruktur gebildet wird, können Batterielegierungen verwendet werden, also Metalle und Legierungen, die als Elektrode in einer Batterie oder einem Akkumulator verwendet werden. Hierunter fallen erfindungsgemäß Zink, Zinn, oder geeignete Legierungen dieser Metalle.

Der funktionale Platzhalter liegt in Form eines Granulats vor, welches bei der Schmelztemperatur des entsprechenden Metalls bzw. der Legierung fest ist. Die Größe und Ausgestaltung der Granulen, also der einzelnen Partikel des Granulats, bestimmen die Porosität des hergestellten Metallformkörpers. Die Platzhalter ermöglichen somit, durch die Wahl unterschiedlicher Größen und Formen an Granulen und eine statistische Verteilung derselben, frei einstellbare dreidimensionale Strukturen.

Als funktionaler Platzhalter werden erfindungsgemäß Salze oder Oxide verwendet. Vorzugsweise ein Salz, insbesondere ein anorganisches Salz. Die Wahl des Salzes ist dabei einerseits davon abhängig, ob dieses im Anschluss an das Erstarren der Metallschmelze entfernt werden soll oder nicht. Zum anderen ist die spätere gewünschte Struktur des Formkörpers ein Faktor zur Auswahl des Platzhalters. Beispielhaft können Natriumchlorid, Kaliumfluorid, Kaliumchlorid, Calciumhydroxid, Lithiumhydroxid, Blei(VI)oxid, Zinkoxid oder Zinksulfat oder Mischungen aus zwei, drei oder mehrerer dieser Verbindungen als Platzhalter eingesetzt werden.

In einer bevorzugten Ausführungsform enthält das Granulat keine Bindemittel. Das Granulat kann somit erfindungsgemäß ohne besondere Vorbehandlung in die Gießform eingegeben werden. Es muss nach der Herstellung des Metallformkörpers kein Bindemittel entfernt werden, es muss keine Berücksichtigung möglicher Nebenreaktionen erfolgen.

Das Weglassen von Bindemittel wird durch das erfindungsgemäße Verfahren, in dem die flüssige Metallschmelze entgegen der Schwerkraft von unten nach oben in die Gießform eindringt, ermöglicht. Wird die Metallschmelze von oben in eine mit einem Platzhalter gefüllte Gießform gegeben, so schwimmt der Platzhalter auf. Die ursprünglich geplante Struktur, die durch den Platzhalter hervorgerufen werden soll, ist nicht mehr gegeben. Eine Reproduzierbarkeit der Struktur ist fast nicht möglich. Um dies zu verhindern, können Bindemittel eingesetzt werden, die verhindern, dass der Platzhalter aufschwimmt. Hierdurch werden jedoch Verbindungen und Wege zwischen den Granulen des Platzhalters bereits durch das Bindemittel gefüllt, so dass erneut die genaue Struktur des Metallformkörpers nur schwer vorhersehbar ist. Zudem muss das Bindemittel so gewählt werden, dass es für die spätere Anwendung nicht nachteilig ist. Obwohl zahlreiche geeignete Bindemittel im Stand der Technik offenbart sind, ermöglicht es das erfindungsgemäße Verfahren nun erstmals, dass Bindemittel weggelassen werden können. In einer bevorzugten Ausführungsform ist daher der erfindungsgemäße Platzhalter fei von Bindemitteln.

In einer erfindungsgemäßen Ausführungsform des Verfahrens umfasst das erfindungsgemäße Verfahren den Schritt g) der vollständigen oder teilweisen Entfernung des Platzhalters aus dem dreidimensionalen Metallformkörper. Dies erfolgt vorzugsweise dadurch, dass der Platzhalter durch Ausspülen entfernt wird. In einer alternativen ebenso bevorzugten Ausführung verbleibt der Platzhalter als Prozessmittel in der Netzwerkstruktur.

Das erfindungsgemäße Verfahren ermöglicht somit die Bereitstellung eines Metallformkörpers mit offenzelliger Metallschwammstruktur. Der Platzhalter liegt als Granulat vor und wird in Art einer Schüttung in die dreidimensionale Gießform eingebracht. Zwischen den Granulen bilden sich Hohlräume aus. Diese Hohlräume werden dann mit flüssigem Metall der Metallschmelze durch das Anlegen einer Druckdifferenz verfüllt. Nach dem Erstarren liegt eine dreidimensionale Struktur in der Art einer offenzelliger Metallschwammstruktur vor, welche in den Hohlräumen den funktionalen Platzhalter aufweist. Dieser kann erfindungsgemäß vollständig oder teilweise entfernt werden oder er verbleibt im Formkörper.

Ist die Entfernung des Platzhalters aus dem ausgehärteten Metallformkörper geplant und gewünscht, so wird als Platzhalter vorzugsweise ein Salz gewählt, welches in einem Lösungsmittel löslich ist. Besonders geeignet sind Lösungsmittel, wie beispielsweise Wasser, Alkohole, Säuren oder Laugen, Ethanol, Methanol, Diethylether oder Tetrahydrofuran. In einer besonders bevorzugten Ausführungsform wird als Salz ein anorganisches Salz verwendet, welches wasserlöslich ist. Dies ermöglicht die Entfernung der Platzhalter durch Ausspülen mit Wasser.

Als Salz kann beispielsweise ein Chlorid-Salz, wie beispielsweise Natriumchlorid oder Kaliumchlorid verwendet werden. Die Größe der jeweiligen Salzkristalle kann bereits bei der Herstellung der Salze eingestellt werden. Alternativ kann die Größe der Salzkristalle beispielsweise durch Mahlen und Sieben auf eine gewünschte Größe eingestellt werden.

Diese Salze mit der gewünschten Partikelgröße und Partikelgrößenverteilung werden dann in die Gießform eingebracht. Die Gießform weist eine erste Öffnung und eine zweite Öffnung auf. Damit der Platzhalter im Inneren der Gießform verbleibt, weist diese an zumindest einer der Öffnungen, vorzugsweise an der ersten Öffnung und der zweiten Öffnung eine Vorrichtung auf, die dafür sorgt, dass der Platzhalter im Inneren der Gießform verbleibt. Hierbei kann es sich beispielsweise um ein Gitter, Keramikfilter, Netze, Glaswolle, Stahlwolle handeln, wobei die Größe des Gitters abhängig von dem Platzhalter bzw. der Größe der Partikel das Platzhalters abhängt.

Die Gießform weist eine dreidimensionale Ausgestaltung auf, wobei der Innenraum der Gießform der späteren Ausgestaltung des Formkörpers entspricht. Entsprechend weist die Gießform in Raumrichtung ein oberes Ende und ein unteres Ende auf. Die Höhe h zwischen diesen beiden Enden kann beliebig gewählt werden. Die Grundfläche kann eine beliebige Ausgestaltung aufweisen. Sie kann rund, oval oder eckig sein. Es ist erfindungsgemäß möglich, dass der Querschnitt des Gießkörpers über die gesamte Höhe h gleichbleibt. Es ist erfindungsgemäß auch möglich, der sich der Querschnitt verändert. So kann eine Verjüngung von unten nach oben oder von oben nach unten vorliegen. Es sind auch mehrere kontinuierliche oder diskontinuierliche Änderungen im Querschnitt im Verlauf über die Höhe h der Gießform möglich. Dabei ist auch eine Nachbearbeitung des erhaltenen Metallformkörpers möglich, wodurch komplexe Strukturen erhalten werden können.

Im Inneren der Gießform wird erfindungsgemäß eine Druckdifferenz erzeugt. Dies kann erfindungsgemäß dadurch erfolgen, dass an die zweite Öffnung der Gießform, welche nicht mit der Metallschmelze in Kontakt gebracht wird, eine Vorrichtung zur Erzeugung einer Druckdifferenz, beispielsweise eine Vakuumpumpe, angeschlossen wird. Es ist erfindungsgemäß jedoch auch möglich, dass ein gegenüber Umgebungsdruck erhöhter Druck erzeugt wird, mit welchem die Metallschmelze dann durch die untere erste Öffnung der Gießform, welche in die Metallschmelze eingetaucht wird, entgegen der Schwerkraft nach oben in die Gießform gedrückt wird.

Das Anbringen einer Vakuumpumpe an eine Gießform ist in einer Ausführungsform der Erfindung auf unterschiedliche Art und Weise möglich. Beispielsweise kann ein Anschlussstutzen hierfür verwendet werden, der auf die zweite Öffnung der Gießform angebracht wird. Auch hier ist die genaue Art der Anbringung abhängig von der Geometrie der Gießform.

Eine Vorrichtung zur Erzeugung einer Druckdifferenz kann auch eine Pumpe zur Erzeugung eines Überdrucks sein. Die Pumpe, die an die Gießform angeschlossen sein kann, kann somit einen Unterdruck oder einen Überdruck im Inneren der Gießform erzeugen. Unter-, beziehungsweise Überdruck beziehen sich dabei auf eine Druckdifferenz gegenüber dem Umgebungsdruck. Die Wahl des genauen Drucks ist dabei abhängig von der Art der Metallschmelze, der Art des Platzhalters sowie der genauen räumlichen Ausgestaltung der Gießform.

Die Gießform, welche mit dem Platzhalter gefüllt ist, wird erfindungsgemäß, mit dem in Raumrichtung unteren ersten Ende, an welchem sich die erste Öffnung befindet, in die Metallschmelze eingebracht. Dabei wird die Gießform derart in die Metallschmelze eingebracht, dass die Gießform am Ende des Verfahrens mit dem entsprechenden Metall bzw. der metallischen Legierung gefüllt ist. Ein vollständiges Eintauchen der Gießform in die Metallschmelze über die gesamte Höhe ist nicht notwendig und auch nicht gewünscht, da Metallanhaftungen an der Außenseite der Gießform einen unerwünschten Materialverlust darstellen. Bevorzugt wird die Gießform etwa zu 10% bis 35% ihrer Höhe in die Metallschmelze eingetaucht.

Anschließend wird eine Druckdifferenz angelegt. Entweder kann mittels eines Unterdrucks die Metallschmelze in das Innere der Gießform gesaugt. Dabei werden die Zwischenräume zwischen den Platzhaltern vollständig ausgefüllt. Anschließend erstarrt das Metall in der Gießform. Das Erstarrungsverhalten kann durch die Sauggeschwindigkeit beeinflusst werden. Die Sauggeschwindigkeit wird hierbei durch Ventile und Durchströmdüsen geregelt. Auch während der Erstarrung bleibt das Vakuum angelegt, sodass eine vollständige Gießform- und Hohlraumfüllung gewährleistet ist.

Anlegen eines Unterdruckes meint erfindungsgemäß, dass der Druck unterhalb des Atmosphärendrucks von 1 bar abgesenkt wird. Vorzugsweise wird ein Unterdruck in einem Druckbereich von 50 mbar bis 900 mbar, insbesondere von 250 mbar bis 750 mbar, vorzugsweise von 400 mbar bis 600 mbar eingestellt. Der genaue Druck ist dabei abhängig von dem gewählten Metall bzw. der Legierung ebenso wie von der genauen dreidimensionalen Ausgestaltung der Gießform.

Das Anlegen eines Überdrucks meint erfindungsgemäß, dass mit Überdruck beispielsweise über einen Dosierofen die Metallschmelze in die Gießform gedrückt wird. Der Überdruck liegt hier insbesondere in einem Bereich von 10 mbar bis 900 mbar und vorzugsweise im Bereich von 40 bis 500 mbar. Dies bedeutet, dass der Druck gegenüber dem Umgebungsdruck um diese Werte erhöht ist.

Das erfindungsgemäße Verfahren ermöglicht eine gleichmäßige und formstabile dreidimensionale Struktur eines Metallformkörpers mit angepasster Metallschwammstruktur. Der Metallschwamm weist im Inneren Hohlräume auf. Durch geeignete Auswahl des Platzhalters kann die Geometrie der Hohlräume kontrolliert eingestellt werden. So können auch sphärische oder kubische Formen der Hohlräume eingestellt werden. Hierdurch kann eine Porosität von 10-90 vol.-% eingestellt werden. Auch Kombinationen und Übergänge der Geometrie der Hohlräume sowie der Porosität des Formkörpers sind realisierbar. Durch die selektive Verteilung der Granulen des Platzhaltergranulats sind unterschiedliche Hohlraumgrößen und Hohlraumstrukturen innerhalb eines Formkörpers einstellbar. So kann zum Beispiel in einem Bereich des Formkörpers eine feine Hohlraumstruktur und in einem anderen Bereich eine grobe Hohlraumstruktur vorliegen. Dies kann beispielsweise dadurch realisiert werden, dass als Platzhalter unterschiedliche Salze gewählt werden. Es ist auch möglich, dass das gleiche Salz mit unterschiedlicher Größe und/oder Geometrie eingesetzt wird. Beim Befüllen der Gießform mit dem Platzhalter können dann Bereiche bestimmt werden, in denen der Platzhalter mit der jeweiligen Größe/Geometrie vorliegt. Die spiegelt sich dann später in der entsprechenden Hohlraumgrößenverteilung des Metallformkörpers wider.

Durch die Wahl unterschiedlicher Salze ist es auch möglich, einen Metallkörper bereitzustellen, bei dem nur in einem Teilbereich der Platzhalter aus den Hohlräumen der Metallschwammstruktur ausgespült wird, wohingegen er in einem anderen Teilbereich des Körpers als Prozessmittel weiter vorliegt. Dies kann durch die Wahl unterschiedlicher Salze ermöglicht werden, welche in unterschiedlichen Lösungsmitteln löslich sind. Zudem ermöglicht das erfindungsgemäße Verfahren, dass neben Platzhalter und Metallschmelze keine weiteren Bestandteile eingesetzt werden. Bindemittel, wie sie im Stand der Technik beschrieben sind, werden nicht unbedingt benötigt. Bevorzugt zeichnet sich das Verfahren dadurch aus, dass es frei ist von der Verwendung von Bindemitteln ist und auch die eingesetzten Platzhalter oder Metalle oder Legierungen keine Bindemittel aufweisen.

Durch die Porosität wird auch die Dichte des Formkörpers bestimmt. Erfindungsgemäß ist es möglich, einen Formkörper mit einer Dichte im Bereich von 0,5 bis 9,5 g/cm³ herzustellen, wobei sich die Dichte auf dem Formkörper ohne Platzhalter bezieht. Wird als Metall Zink oder eine Zinklegierung mit einem Anteil von Zink von zumindest 98 Gew.-% verwendet, lassen sich Dichten im Bereich von 0,7 bis 6,5 g/cm³ realisieren.

Das erfindungsgemäße Verfahren ermöglicht die Herstellung eines durchgängigen, leitenden Metallgerüsts. Durch die offenzellige Metallschwammstruktur ist ein Durchströmen mit Fluiden oder Gasen möglich. Unabhängig von der Größe der hergestellten Metallformkörper sind außer der Gießform, dem Platzhalter und der Metallschmelze keine weiteren Stoffe, Additive, Bindemittel o. ä. erforderlich.

Das erfindungsgemäße Verfahren ermöglicht es, dass die erfindungsgemäß hergestellten Metallformkörper als Anoden in Batterien oder Akkumulatoren oder Festkörperbatterien verwendet werden. Durch die Struktur kann man unmittelbaren Einfluss auf die Zellkapazität nehmen. Die Zelllebensdauer wird deutlich erhöht. Eine Umlagerung des aktiven Materials zum Beispiel im unteren Bereich der Anode wird unterdrückt. Dies führt dazu, dass die Anode formstabil bleibt und die Nutzungsdauer erhöht wird.

Überraschenderweise hat sich gezeigt, dass beim Entladen das Zink in der Nähe seiner Entladungsstelle bleibt und beim Laden wieder in der Nähe der Entladungsstelle zurückgewonnen werden kann. Es hat sich gezeigt, dass die Abscheidung des Metalls sich auf die Mitte der Anode konzentriert. Es diffundiert nicht in den Elektrolyten. Eine gleichmäßige Verteilung bleibt erhalten.

Zudem wurde beobachtet, dass das Dendritenwachstum deutlich herabgesetzt wurde, wodurch die Gefahr eines Kurzschlusses reduziert wird.

Durch das Gießen mit Druckdifferenz bildet sich ein offenzelliger Metallformkörper aus, der eine durch die Gießform vorgegebene dreidimensionale Form und aufgrund des gewählten Platzhalters eine definierte Verteilung an Hohlräumen im Inneren der Metallschwammstruktur aufweist. Man erhält somit komplexe dreidimensionale Netzwerke an Zink- oder Zinn-Strukturen oder Strukturen aus Legierungen dieser Metalle. Solche Strukturen eignen sich insbesondere zur Verwendung als Anoden in Primärbatterien (Einwegbatterien), in Sekundärbatterien (wiederaufladbaren Batterien, Akkumulatoren) oder auch in (dreidimensionalen) Festkörperbatterien.

Die erhaltenen Metallformkörper sind fest und formstabil. Es ist daher auch möglich, dass die Metallformkörper vor oder nach Entfernung des Platzhalters mechanisch bearbeitet werden. Dadurch lassen sich auch sehr spezielle Elektrodenformen herstellen.

Mit dem erfindungsgemäßen Verfahren lassen sich Metallformkörper herstellen, welche Porengrößen im Bereich von 0,01 mm bis 20 mm, insbesondere von 0,04 mm bis 18 mm, vorzugsweise von 0,06 mm bis 16 mm, bevorzugt von 0,1 mm bis 14 mm aufweisen. Die Porosität liegt bevorzugt zwischen 10-90 vol.-%, insbesondere bei 50-75 vol.-%, vorzugsweise 60-70 vol.-%. Aufgrund der offenzelligen Metallschaumstruktur sind alle Hohlräume im Inneren des Formkörpers miteinander verbunden. Aufgrund der hierdurch auftretenden Kapillarkräfte wird im Falle einer Anwendung als Anode die Prozesslösung in den Formkörper aufgesogen. Somit ergibt sich eine große Oberfläche und damit eine gute Interaktion zwischen der Anode und dem Elektrolyten der Batterie. Auf Grund der großen Oberfläche können die erhaltenen Metallformkörper erfindungsgemäß auch als Anode zum kathodischen Korrosionsschutz von Stahl und Stahlbeton verwendet werden.

Im nachfolgenden Ausführungsbeispiel wird die vorliegende Erfindung in nicht limitierender Weise weiter erläutert.

### Ausführungsbeispiele

Es wurde nach dem erfindungsgemäßen Verfahren eine Anode aus Batteriezink hergestellt. Die Druckdifferenz wurde durch Anlegen eines Unterdrucks eingestellt.

Hierfür wurde eine Gießkokille (Gießform) bereitgestellt, welche eine zylindrische Form aufwies mit einem Innendurchmesser von 55 mm und einer Länge von 1000 mm bereitgestellt. Die Gießkokille wurde mit Natriumchlorid gefüllt, welches eine durchschnittliche Teilchengröße von 0,4 - 1,25 mm aufwies. Damit das Natriumchlorid, also der Platzhalter, im Inneren der Gießkokille verbleibt, enthielt diese am unteren Ende im Bereich der Öffnung einen Keramikfilter.

An das obere Ende (Ende in Längsrichtung, im Raum nach oben orientiert) der Gießkokille wurde an die dort befindliche Öffnung ein Stutzen angeschlossen, welcher über einen Schlauch mit einer Vakuumpumpe verbunden war.

Es wurde ein Unterdruck von 500 mbar angelegt. Nachdem die Gießkokille vollständig gefüllt und das Metall erstarrt war, wurde das Natriumchlorid mit Wasser ausgespült.

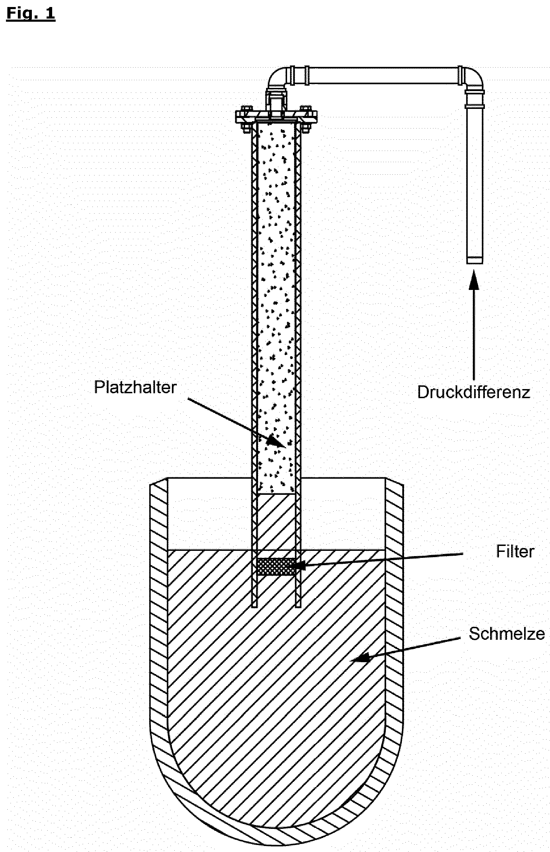

In Fig. 1 ist schematisch das Vorgehen dargestellt.

In Fig. 2 und 3 sind Querschnitte von Formkörpern mit unterschiedlichen Porengrößen und Verteilungen gezeigt, welche nach dem erfindungsgemäßen Verfahren wie im Beispiel beschrieben hergestellt wurden.

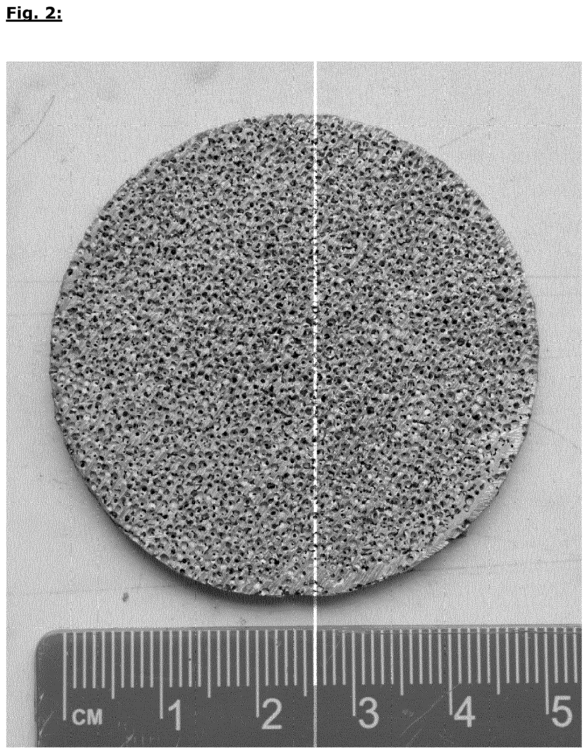

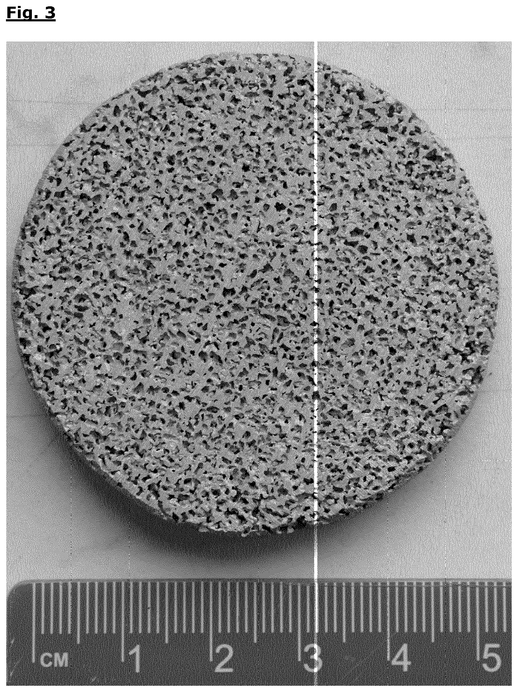

Ein Formkörper mit einer feinen Metallschaumstruktur und einer Porengröße von 0,15 mm bis 0,7 mm ist in Fig. 2 gezeigt. Die Dichte betrug 1,9 g/cm³ mit einer Porosität von 73,4 vol.-%. Der Formkörper aus Fig. 3 wies eine grobe Metallschaumstruktur auf. Die Porengröße betrug 0,4 mm bis 1,25 mm und die Dichte 3,0 g/cm³. mit einer Porosität von 58,0 vol.-%.

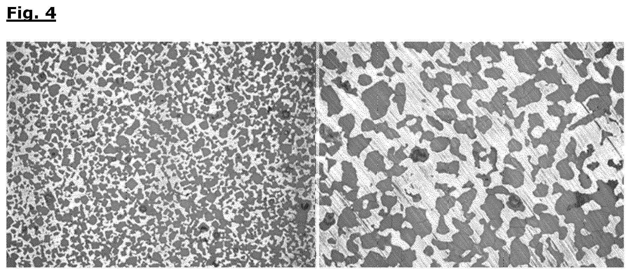

Fig. 4 zeigt die Abbildungen auf Basis derer die metallografische Bestimmung der spezifischen Oberfläche der in Fig. 2 und Fig. 3 gezeigten Strukturen erfolgte. Der Formkörper aus Fig. 2 findet sich in Fig. 4 links wieder; der Formkörper gemäß Fig. 3 ist in Fig. 4 rechts dargestellt.

In der nachfolgenden Tabelle sind die Ergebnisse dargestellt:

| | Feine Schwammstruktur (Fig. 2, Fig. 4 links) | Grobe Schwammstruktur (Fig. 3, Fig. 4 rechts) |
|---|---|---|
| Flächenanteil in % | 52,7 | 47,4 |
| Gesamtfläche in µm² | 207499000 | 207499000 |
| Ges. Grenzlänge in µm | 1271725 | 621494 |
| Anzahl Poren | 1021 | 280 |
| Spezifische Oberfläche in m²/m³ | 6128,8 | 2995,2 |

Für die Überprüfung der Zyklenfestigkeit der Metallschwammstruktur wurde eine Testzelle gewählt, in der die Kathode aus Nickelhydroxid (Ni(OH)₂) besteht.

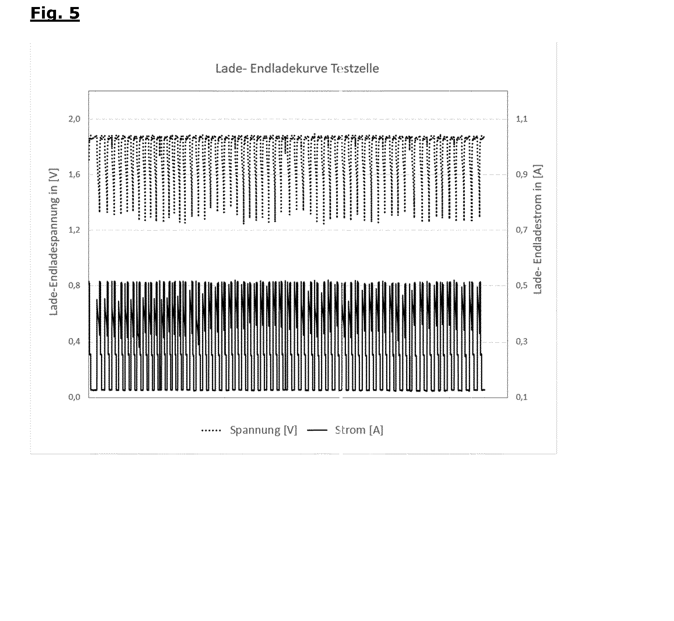

Die Testzelle wurde zyklisch be- und entladen und die Ströme sowie die Spannung aufgezeichnet. Die Lade und Entladekapazitäten sind in Fig. 5 dargestellt. Sie zeigen, dass die so erzeugte Testzelle ohne Leistungsverlust über viele Zyklen arbeitet.

## Patentansprüche

1. Verfahren zur Herstellung eines dreidimensionalen Metallformkörpers mit einer offenzelligen Metallschwammstruktur zur Verwendung als Anode in Batterien, Akkumulatoren und Feststoffbatterien, wobei das Metall ausgewählt ist aus Zink, Zinn oder geeigneten Legierungen dieser Metalle, wobei die Legierung, wenn es sich um eine Zinklegierung handelt, einen Anteil von Zink von zumindest 98 Gew.-% aufweist, umfassend die folgenden Schritte:
a) Bereitstellen einer Metallschmelze,
b) Bereitstellen einer dreidimensionalen Gießform, welche eine erste Öffnung und eine zweite Öffnung aufweist, wobei die erste Öffnung in Raumrichtung das untere Ende der Gießform darstellt und die zweite Öffnung in Raumrichtung das obere Ende,
c) Befüllen der Gießform mit Platzhaltern, wobei als Platzhalter Salze oder Oxide verwendet werden, die bei der Schmelztemperatur des Metalls als Granulat vorliegen,
d) in Kontakt bringen der Metallschmelze mit der ersten Öffnung der Gießform,
e) Anlegen einer Druckdifferenz zwischen der ersten Öffnung und der zweiten Öffnung der Gießform, wodurch die Metallschmelze in das Innere der Gießform gelangt, gefolgt vom
f) Erstarren der Metallschmelze im Inneren der Gießform, und
g) entweder vollständige Entfernung der Platzhalter aus dem dreidimensionalen Metallformkörper, oder teilweise Entfernung der Platzhalter aus dem dreidimensionalen Metallformkörper, wobei diese durch die Auswahl von unterschiedlichen Salzen oder Oxiden erreicht wird, die in unterschiedlichen Lösungsmitteln löslich sind,
wodurch der Metallformkörper mit dreidimensionaler offenzelliger Metallschwammstruktur und einer Porosität von 50-75 Vol.-%, vorzugsweise 60-70 Vol.-% erhalten wird.

2. Verfahren nach Anspruch 1, **dadurch gekennzeichnet, dass** das Metall Zink oder eine Zinklegierung mit einem Anteil von Zink von zumindest 98 Gew.-% ist.

3. Verfahren nach einem oder mehreren der Ansprüche 1 bis 2, **dadurch gekennzeichnet, dass** in Schritt e) ein Unterdruck angelegt wird, wobei der Druck insbesondere auf einen Bereich von 50 mbar bis 900 mbar, insbesondere von 250 mbar bis 750 mbar, vorzugsweise von 400 mbar bis 600 mbar eingestellt wird.

4. Verfahren nach einem oder mehreren der Ansprüche 1 bis 2, **dadurch gekennzeichnet, dass** in Schritt e) ein Überdruck angelegt wird, wobei der Überdruck insbesondere auf einen Bereich von 20 mbar bis 10 bar eingestellt wird.

5. Verfahren nach einem oder mehreren der Ansprüche 1 bis 4, **dadurch gekennzeichnet, dass** der Platzhalter ein Salz, insbesondere ein anorganisches Salz ist.

6. Verfahren nach einem oder mehreren der Ansprüche 1 bis 5, **dadurch gekennzeichnet, dass** die Größe der Hohlräume im Metallformkörper nach der Erstarrung im Bereich von 0,01 mm bis 20 mm, insbesondere von 0,04 mm bis 18 mm, vorzugsweise von 0,06 mm bis 16 mm, bevorzugt von 0,1 mm bis 14 mm liegt.

7. Verfahren nach zumindest einem der Ansprüche 1 bis 6, **dadurch gekennzeichnet, dass** das in Kontakt bringen in Schritt d) das Eintauchen der Gießform mit dem unteren Ende, an welche dich die erste Öffnung befindet, in die Metallschmelze bedeutet.

8. Verfahren nach Anspruch 7, **dadurch gekennzeichnet, dass** die Gießform zu 10% bis 35% ihrer Höhe in die Metallschmelze eingetaucht wird.

9. Verwendung eines dreidimensionalen Metallformkörpers wie nach einem Verfahren gemäß zumindest einem der Ansprüche 1 bis 8 erhalten als Anode in Batterien.

10. Verwendung nach Anspruch 9, **dadurch gekennzeichnet, dass** es sich um einen Metallformkörper aus Zink oder einer Zinklegierung mit einem Anteil von Zink von zumindest 98 Gew.-% handelt.

## Claims

1. A process for preparing a three-dimensional metal body with an open-cell metal foam structure for use as an anode in primary or secondary batteries and all-solid-state batteries, wherein said metal is selected from zinc, tin, or suitable alloys of such metals, wherein, if the alloy is a zinc alloy, it has a proportion of zinc of at least 98% by weight, comprising the following steps:
a) providing a molten metal,
b) providing a three-dimensional casting mold, which has a first opening and a second opening, wherein the first opening in the direction of space represents the lower end of the casting mold, and the second opening in the direction of space represents the upper end,
c) filling the casting mold with placeholders, in which salts or oxides which are present in the form of granules at the melting temperature of the metal are used as said placeholders,
d) contacting the molten metal with the first opening of the casting mold,
e) applying a pressure difference between the first opening and the second opening of the casting mold, whereby the molten metal gets into the interior of the casting mold, followed by
f) allowing the molten metal to solidify in the interior of the casting mold, and
g) either completely removing the placeholders from the three-dimensional metal body, or partially removing the placeholders from the three-dimensional metal body, which is achieved by selecting different salts or oxides that are soluble in different solvents,
whereby the metal body is obtained with a three-dimensional open-cell metal foam structure having a porosity of 50-75% by volume, preferably 60-70% by volume.

2. The process according to claim 1, **characterized in that** said metal is zinc or a zinc alloy having a proportion of zinc of at least 98% by weight.

3. The process according to one or more of claims 1 to 2, **characterized in that** a negative pressure is applied in step e), wherein the pressure is set, in particular, within a range of from 50 mbar to 900 mbar, especially from 250 mbar to 750 mbar, preferably from 400 mbar to 600 mbar.

4. The process according to one or more of claims 1 to 2, **characterized in that** a positive pressure is applied in step e), wherein the positive pressure is set, in particular, within a range of from 20 mbar to 10 bar.

5. The process according to one or more of claims 1 to 4, **characterized in that** said placeholder is a salt, especially an inorganic salt.

6. The process according to one or more of claims 1 to 5, **characterized in that** the size of the cavities in the metal body after solidification is within a range of from 0.01 mm to 20 mm, especially from 0.04 mm to 18 mm, preferably from 0.06 mm to 16 mm, preferably from 0.1 mm to 14 mm.

7. The process according to at least one of claims 1 to 6, **characterized in that** said contacting in step d) means the immersion of the casting mold with the lower end, on which the first opening is provided, into the molten metal.

8. The process according to claim 7, **characterized in that** the casting mold is immersed into the molten metal to 10% to 35% of its height.

9. Use of a three-dimensional metal body as obtained by a process according to at least one of claims 1 to 8 as an anode in batteries.

10. The use according to claim 9, **characterized in that** the metal body is made of zinc or a zinc alloy having a proportion of zinc of at least 98% by weight.

## Revendications

1. Procédé de fabrication d'un corps métallique tridimensionnel doté d'une structure de mousse métallique à cellules ouvertes, à utiliser comme anode dans les batteries, les accumulateurs et les batteries à l'état solide, dans lequel le métal est choisi parmi le zinc, l'étain ou des alliages appropriés de ces métaux, dans lequel l'alliage, lorsqu'il est un alliage de zinc, présente une proportion de zinc d'au moins 98 % en poids, comprenant les étapes suivantes consistant à :
a) fournir un métal fondu,
b) fournir un moule de coulée tridimensionnel ayant une première ouverture et une deuxième ouverture, dans lequel la première ouverture représente l'extrémité inférieure du moule de coulée dans la direction de l'espace, et la deuxième ouverture représente l'extrémité supérieure du moule de coulée dans la direction de l'espace,
c) remplir le moule avec des pièces de rechange, dans lequel des sels ou des oxydes qui existent sous forme de granules à la température de fusion du métal sont utilisés comme pièces de rechange,
d) mettre le métal fondu en contact avec la première ouverture du moule de coulée,
e) appliquer une différence de pression entre la première ouverture et la deuxième ouverture du moule de coulée, ce qui permet au métal fondu de pénétrer à l'intérieur du moule de coulée, suivies par les étapes consistant à
f) solidifier le métal fondu dans l'intérieur du moule de coulée, et
g) soit éliminer complètement les pièces de rechange du corps métallique tridimensionnel, soit éliminer partiellement les pièces de rechange du corps moulé métallique tridimensionnel, ce qui est atteint en sélectionnant différents sels ou oxydes solubles dans différents solvants,
pour obtenir le corps métallique doté d'une structure tridimensionnelle de mousse métallique à cellules ouvertes et ayant une porosité de 50-75 % en volume, de préférence 60-70 % en volume.

2. Procédé selon la revendication 1, **caractérisé en ce que** ledit métal et le zinc ou un alliage de zinc avec une proportion de zinc d'au moins 98 % en poids.

3. Procédé selon l'une ou plusieurs des revendications 1 à 2, **caractérisé en ce qu'**un vide est appliqué à l'étape e), dans lequel la pression est ajustée notamment dans une plage de 50 mbar à 900 mbar, notamment de 250 mbar à 750 mbar, de préférence de 400 mbar à 600 mbar.

4. Procédé selon l'une ou plusieurs des revendications 1 à 2, **caractérisé en ce qu'**une surpression est appliquée à l'étape e), dans lequel la surpression est ajustée notamment dans une plage de 20 mbar à 10 bar.

5. Procédé selon l'une ou plusieurs des revendications 1 à 4, **caractérisé en ce que** la pièce de rechange est un sel, notamment un sel inorganique.

6. Procédé selon l'une ou plusieurs des revendications 1 à 5, **caractérisé en ce que** la taille des cavités dans le corps métallique après solidification est comprise entre 0,01 mm et 20 mm, notamment entre 0,04 mm et 18 mm, de préférence entre 0,06 mm et 16 mm, de préférence entre 0,1 mm et 14 mm.

7. Procédé selon au moins une des revendications 1 à 6, **caractérisé en ce que** la mise en contact à l'étape d) signifie l'immersion du moule de coulée avec l'extrémité inférieure, où la première ouverture est située, dans le métal fondu.

8. Procédé selon la revendication 7, **caractérisé en ce que** le moule de coulée est immergé dans le métal fondu à hauteur de 10 % à 35 % de sa hauteur.

9. Utilisation d'un corps métallique tridimensionnel tel qu'obtenu par un procédé selon au moins une des revendications 1 à 8 comme anode dans des batteries.

10. Utilisation selon la revendication 9, **caractérisée en ce qu'**il s'agit d'un corps métallique en zinc ou en un alliage de zinc avec une proportion de zinc d'au moins 98 % en poids.
